# NEW EUROPEAN PATENT SPECIFICATION

(11) **EP 2 650 658 B2**
(45) Date of publication and mention of the opposition decision: **03.08.2022**
(45) Mention of the grant of the patent: 02.03.2016
(21) Application number: 12163727.6
(22) Date of filing: 11.04.2012
(51) Int. Cl.: G01F 17/00, G01C 7/06

(54) **Apparatus for the measurement of capacity of a container and associated method of measurement**
Vorrichtung zum Messen der Kapazität eines Behälters und dazugehöriges Messverfahren
Appareil pour la mesure de la capacité d'un conteneur et procédé de mesure associé

(43) Date of publication of application: 16.10.2013
(73) Proprietor: Assytech SRL, 23018 Talamona (SO) (IT); Start Italiana SRL, 20813 Bovisio Masciago (MB) (IT)
(72) Inventor: Motti, Edoardo, 23018 Talamona (SO) (IT)
(74) Representative: Vitillo, Giuseppe

(56) References cited:
- EP-A1- 1 797 813
- WO-A1-2009/051571
- DE-U1- 9 320 747
- FR-A1- 2 752 295
- JP-A- 11 030 518
- US-A- 4 161 715
- US-A1- 2007 153 296

## Description

The present invention describes an apparatus for measuring the capacity of a container, normally known as cubature, and to the relative measurement method associated to said apparatus.

Devices are known, which determine the cubature of a container by using laser measurement devices.

In particular, patent EP2212658 describes a device, adapted for determining the cubature of a container by placing inside the container itself a laser measurement device, which is able to move in the space by means of moving systems, so as to determine the cubature of the container.

Said laser measurement device is substantially kept close to the upper opening, through which the measurement apparatus itself is placed inside the container.

Further moving apparatuses are known, in which the laser source or at least part of the electronic apparatus is arranged inside the container itself.

Furthermore, said measurement systems are placed inside the container and are kept therein at fixed heights. If necessary, they can be manually moved, so as to reach different heights, in order to compare the data obtained and reduce the uncertainty of the measurement performed.

To this regard, it is useful to remember that the cubature measurement of a container is performed when there is no liquid inside it. The dimensional data obtained during the measurements can be used to create a comparison table, by means of which, as a function of the depth measured, for example, by means of a level indicator inserted into the container itself, it is possible to determine the quantity of liquid contained in the container at the moment of the level measurement.

In particular applications, such as for example containers adapted to contain fuels, the safety law provisions currently in force establish that, in order to perform any kind of measurement, no electronic device has to be inserted into the container itself; if, on the other hand, operators are forced to insert electronic devices into the container, there must be no fuel therein and the container itself has to be degassed.

It is known from patent application JP1130518 a control part which controls a laser drive part. Said laser driven part sends out laser light to the wall face of a cavity from a laser-light transmitting-receiving part, and it receives its reflected light. Thereby, a time-difference output signal is output from the laser-light transmitting-receiving part, and a time difference is output as digital data from a signal conversion part.

From patent application DE9320747 it is known a receiving means for measuring the free passage cross-section. Said receiving means having a laser emitter, a mirror and a measured values and an evaluation unit. The mirror 5 is able to rotate by means of a rotating motor. The distance between the laser sensor and the rotating motor, formed in the longitudinal direction of the rotation axis, is variable.

It is also known from patent application FR2752295 a method designed for the determination of the general shape of the walls of an underground cavity including the following stages: (a) form an access way to the cavity ; (b) introduce into the cavity via the access a laser beam telemetry measuring device; (c) carryout a measuring sweep and take a series of distance measurements from the device to the walls of the cavity; (d) collect the data measured.

The object of the present invention is to solve the above-mentioned technical problems by providing an apparatus, which avoids the introduction of electronic devices into the container being measured and which is able to scan the container with a high resolution and a reduced uncertainty, thus guaranteeing a difference, with respect to the cubature calculation method described above, that is lower than the uncertainty allowed by the measurement devices themselves.

An aspect of the present invention relates to an apparatus for measuring the capacity of a container with the features set forth in appended claim 1.

A further aspect of the present invention relates to a method for measuring the capacity of a container with the features set forth in appended claim 6.

Another aspect of the present invention concerns a vehicle having the features set forth in appended claim 9.

The accessory features of the single aspects of the present invention are set forth in the respective dependent claims.

The additional features and advantages of the apparatus, of the measurement method and of the vehicle according to the present invention will be better understood from the following detailed description of at least one embodiment with reference to the enclosed drawings, which respectively illustrate what follows:
- figure 1 shows a preferred embodiment of the apparatus according to the present invention placed in a container;
- figure 2 shows, in a section view from the top, an example of the angular pitch, with which the measurements of the apparatus according to the present invention can be performed;
- figure 3 shows, in a lateral section view, a possible path defined by the laser ray for the measurement of the capacity during a scan of the entire container performed by the apparatus shown in figure 1;
- figures 4A, 4B and 4C show different projection views of a three-dimensional reconstruction of a container, by means of the data obtained from the measurements performed by the apparatus according to the present invention, in which one can see the numerous points in which the measurement has been performed by the apparatus according to the present invention;
- figure 5 shows an embodiment of the vehicle comprising the apparatus according to the present invention;

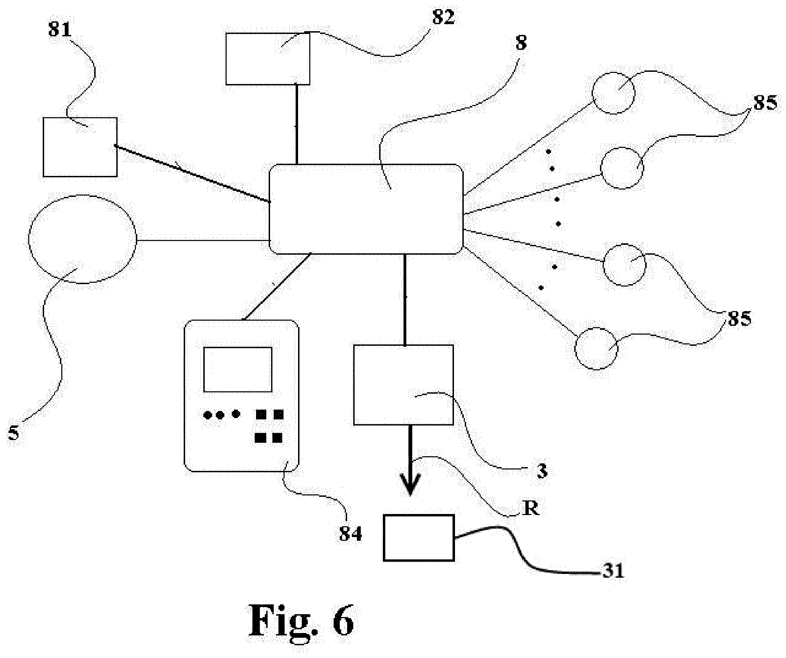

- figure 6 shows an electronic circuit flowchart of the apparatus according to the present invention;
- figure 7 shows a second embodiment of the invention. With reference to the figures mentioned above, apparatus 2 for the measurement of the capacity of a container C comprises: a laser measurement device 3, adapted to generate a ray R at a predetermined wave length for measuring a distance; an actuating device 5, adapted to move said apparatus 2 in order to perform the measurement of the capacity of said container C; at least one bearing shaft 4, which extends along a longitudinal axis k and is adapted to be inserted, at least partially, into container C through an opening C0.

Container C is preferably accessible for inspection from the top; thus, said opening C0 is provided, for example, with a door. Said opening can be used to introduce fluid into container C or it can be an inspection opening.

Apparatus 2 according to the present invention comprises, furthermore: an optic deflector 31, adapted to deflect said ray R in a desired direction; at least one electronic control device 8, adapted to calculate the position of optic deflector 31 and to process the data obtained from said laser measurement device 3.

Laser measurement device 3 is arranged outside of container C, so that all the electronic apparatuses, including electronic control device 8 and the electronic part of actuating device 5, are outside container C itself. Optic deflector 31, which is associated to said bearing shaft 4, is the only element that is present inside container C while the measurement is performed.

Said optic deflector 31 is a passive and inert element, which is not provided with any kind of electronic circuit. Preferably, said optic deflector 31 is a monolithic element, adapted to deflect ray R, thus keeping it collimated. In the preferred embodiment, said optic deflector 31 is a reflecting element for the frequency with which ray R propagates, for example a mirror, preferably adapted to deflect ray R by approximately 90°, i.e. perpendicular to axis k of shaft 4. In alternative embodiments, the element used as optic deflector can be a prism with refractive properties for the wave length of ray R.

Actuating device 5, which is controlled by said electronic control device 8, is able to cause said optic deflector 31 to rotate around longitudinal axis k of shaft 4 and to move deflector 31 itself along a direction that is parallel to longitudinal axis k of shaft 4. Said optic deflector 31 is moved in a continuous manner.

In order to allow the transmission of the ray from laser measurement device 3 to optic deflector 31, so as to avoid possible interruptions of the ray and minimize measurement errors and uncertainties, said bearing shaft 4 comprises a through hole 41, which is preferably arranged in correspondence to longitudinal axis k and is adapted to allow ray R to pass from said laser measurement device 3 to said optic deflector 31 and vice versa.

The operating mode of a laser measurement device 3 is known to the skilled person and, therefore, will not be described in detail.

In the embodiment shown in the accompanying drawings, said laser measurement device 3 is arranged close to a first end 4a of said bearing shaft 4, preferably above through hole 41 and aligned therewith. Furthermore, optic deflector 31 is fixed to second end 46, preferably aligned with through hole 41, as well.

For the purpose of the present invention, expression measurement device 3 and/or optic deflector 31 aligned with hole 41 means that both devices are arranged in such a way that ray R can run along said hole 41 by at least partially passing through said bearing shaft 4 without the need for further active elements adapted to direct said ray R towards the two devices.

Actuating device 5 is adapted to cause the rotation of said shaft 4, to which deflector 31 is fixed, and to move said apparatus 2 along a guide 22 arranged along a direction that is parallel to longitudinal axis k of shaft 4. In particular, said actuating device 5 comprises at least one electric motor and at least one mechanism, which allows both the rotation of shaft 4 and the movement of apparatus 2 along said guide 22. Guide 22 is arranged outside of container C, which is subject to the measurement aimed at determining the cubature of the container itself.

Said guide 22 preferably has a longitudinal length that is equal to the length of shaft 4.

Preferably, said laser measurement device 3 rotates around the same axis "K" around which shaft 4 rotates, so as to reduce the refraction errors of optic deflector 31.

An encoder 81 is connected in an integral manner to shaft 4, said encoder 81 preferably being optic or magnetic and being adapted to detect the angular movements of said shaft 4, and in particular to detect an increase in angular movement α. When said increase in angular movement α is reached, a measurement is performed by measurement device 3.

In an alternative embodiment, said encoder 81 is directly built-in in the motor adapted to move apparatus 2, for example it is built-in in a brushless motor.

Said encoder 81 sends electrical signals to the electronic control device 8, which, when the angular increase α is reached, enables laser measurement device 3 to perform the measurement. Laser measurement device 3 itself sends an electrical signal representing the measurement to control device 8, which processes said data, thus obtaining distance d' between axis k and the inner wall of container C at a predetermined height h', for example with respect to the bottom of the container, and at a predetermined angle α. These data are stored in memory means 82, in which said set of three values are properly stored.

At the same time, control device 8 itself, by enabling said actuating device 5, moves optic deflector 31 along said axis k. This movement of optic deflector 31 along the axis k is correlated with the rotatory movement of deflector 31 itself by means of said mechanism 51.

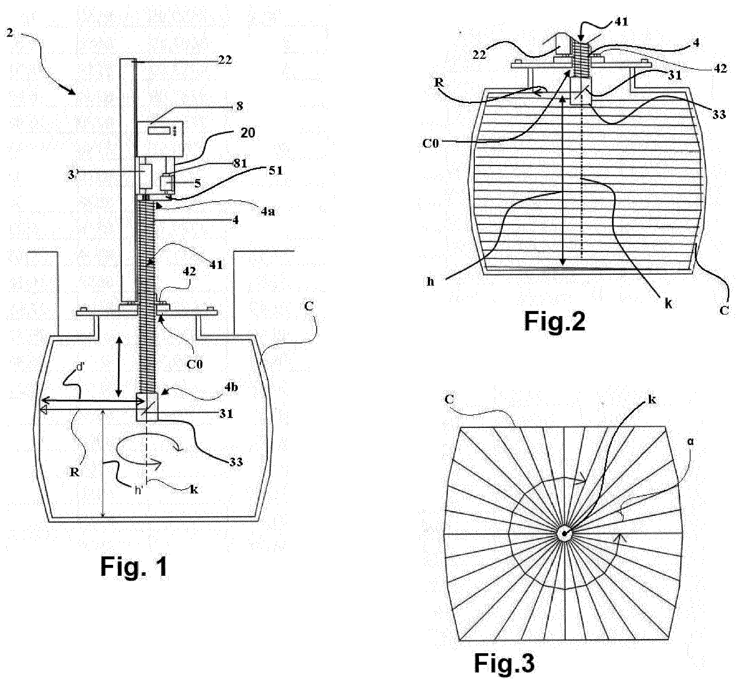

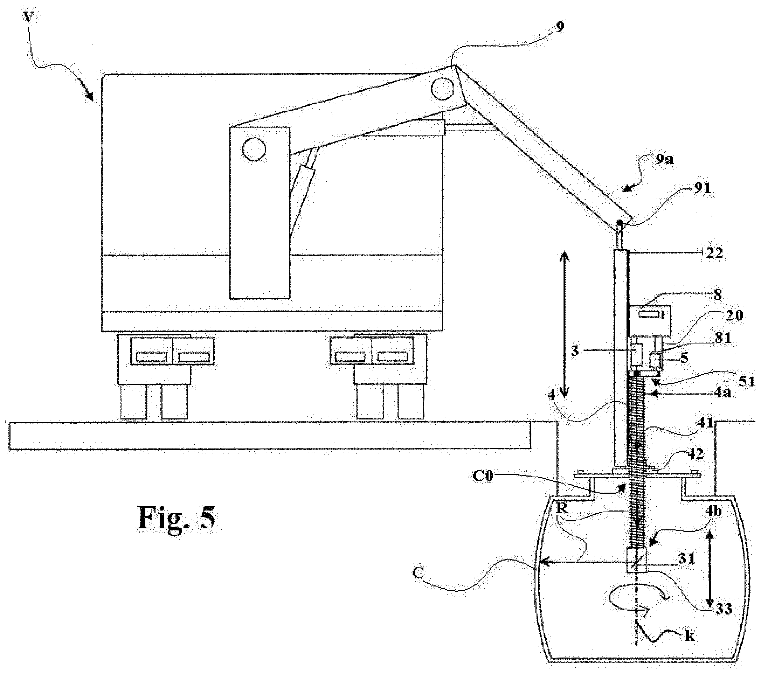

In a first embodiment, which is shown, for example, in figures 1 and 5, said shaft 4 is threaded, thus externally becoming a screw with a predetermined pitch. Actuating device 5, by means of said mechanism 51, is adapted to cause the rotation of said shaft 4, which screws in a counter-threaded flange 42, so that, during the rotation around axis k, shaft 4 itself moves along axis k itself in the direction following the thread of shaft 4. Guide 22 is fitted to said flange 42, so that guide 22 itself is parallel to longitudinal axis k of shaft 4.

By mere way of example, with a right-hand thread, if said shaft 4 moves in an anticlockwise direction, it moves in such a way that optic deflector 31 associated thereto increases its height with respect to the bottom of container C. On the other hand, if the shaft rotates in a clockwise direction, according to the rule of the right hand, optic deflector 31 is moved towards the bottom of container C. An opposite scenario applies to the case in which shaft 4 is provided with a left hand thread.

Mechanism 51 of the present embodiment is a worm screw, which is fitted to the shaft of the electric motor comprised in actuating device 5 and is coupled to the thread of shaft 4.

Therefore, with one single motor is it possible to move said optic deflector both along axis k and around it in a synchronized manner and at the speed desired.

In the present embodiment, said actuating device 5, laser measurement device 3 and control device 8 are housed in a casing 20, preferably made of metal. Said casing 20 is connected to a carriage, which is not shown in the figures and is associated to said guide 22, so as to move entire apparatus 2 along said axis k during the movement of apparatus 2 along longitudinal axis k. Said casing 20 has an electrical an mechanical protection function; indeed, the metal structure protects the electrical devices from possible electromagnetic interferences coming from the outside, which might affect the measurement data. Furthermore, said metal casing 20 also fulfills a protection function against possible electromagnetic interferences generated by the electrical circuits comprised in apparatus 2 itself, thus reducing the costs needed to make said apparatus electronically compatible, thanks to the fact that all the electronic circuits are comprised within casing 20.

The rotation speed with which said optic deflector 31 rotates around said axis k is directly proportional to the movement speed along axis k itself. In the embodiment shown in figures 1 and 5, the factor of proportionality between rotation speed and movement speed along axis k varies as a function of the pitch of the thread associated to shaft 4. By means of the measurement performed by encoder 81, control device 8 is able to determine the absolute value of the movement and the direction in which the movement has taken place, both in terms of rotation direction and of movement direction along said axis k.

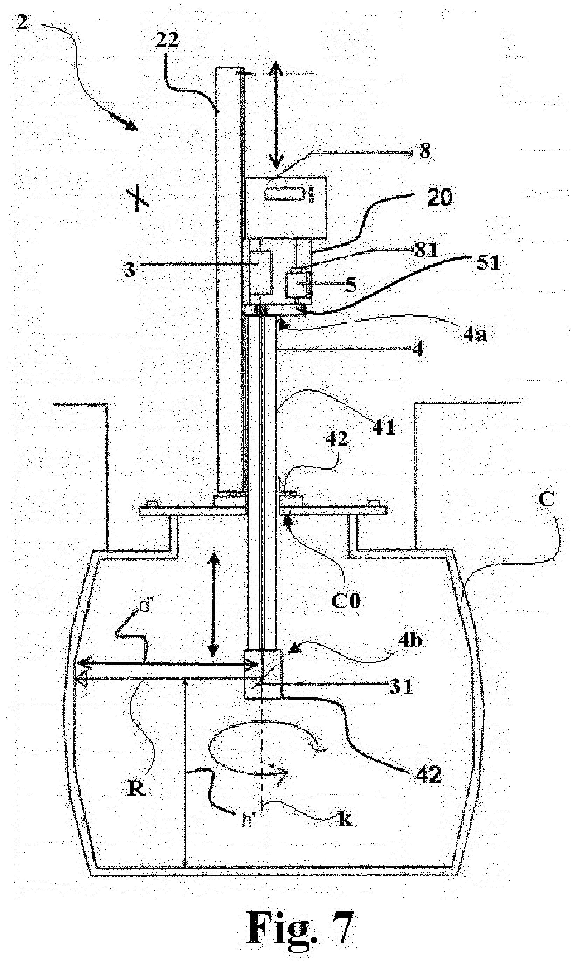

In a second embodiment, which is shown for example in figure 7, said mechanism 51 comprises, in order to move deflector 31, a rack, which is not shown and is fixed to said guide 22, and a gear system, which allows shaft 4 and optic deflector 31 associated thereto to be lifted. In this embodiment, actuating device 5, by means of said mechanism 51 and with a single motor, is able to lift entire apparatus 2 along said guide 22 and to rotate said shaft 4 around its own axis k. By means of said electric motor, said mechanism and, in particular, said gears allow bearing shaft 4 to be rotated and said deflector to be lifted, sliding along said guide 22. In this embodiment, as well, the speed of rotation around axis k and the speed with which deflector 31 itself is moved along axis k are correlated by means of the gear ratio of the gears comprised in mechanism 51. Said mechanism 51 allows a synchronized movement to be obtained. By means of the measurement performed by encoder 81, which is integral to shaft 4, control device 8 is able both to determine the value of the angular movement and to define the direction and the value of the movement along said axis k thanks to the gear ratio of mechanism 51.

Preferably, said apparatus 2 is associated with a vehicle V. Said vehicle V comprises at least one articulated arm 9, to which said guide 22 , on which apparatus 2 itself slides, is fixed, preferably hinged. Preferably, guide 22 is fixed to an end 9a by means of a hinge 91 and an actuator is connected to articulated arm 9, so as to allow an adjustment of the inclination of shaft 4 and, thus, of axis k, in order to arrange said axis k in a vertical position, i.e. perpendicular to the a reference plane.

For the purpose of the present invention, the wording reference plane indicates the plane defined by the surface of the fluid, when the fluid itself is inserted into container C.

Said vehicle V can be both a motorized vehicle, like the one shown in figure 5, and a manually operated cart.

Apparatus 2 according to the present invention is adapted to implement the method for measuring the capacity of a container C.

The method for measuring the capacity of a container C by means of apparatus according 2 to claim 1 comprises the following steps, which are preferably performed in sequence:
- inserting bearing shaft 4, at least partially, into container C through opening C0;
- arranging apparatus 2 in a vertical position;
- moving said optic deflector 31 so as to place it in a reference point at a known height from the bottom;
- starting the measurement procedure;
- rotating said deflector 31 around the longitudinal axis k of shaft 4 and performing the measurement at predetermined angles α;
- moving optic deflector 31 along said axis k, this step being performed simultaneously with the step of rotating deflector 31 itself.

The measurement is performed in a continuous manner by moving optic deflector 31 up to a known height h, which is equal to a predetermined distance from the bottom of container C, as shown for example in figure 3.

In order to allow the actuation of the step of positioning apparatus 2, namely perpendicular to the reference plane, apparatus 2 itself comprises at least one electronic or mechanical sensor 85, adapted to allow the correct positioning of apparatus 2 perpendicular to said reference plane. This operation is commonly defined with the wording level. For the purpose of the present invention, the wording level means that axis k is perpendicular to the reference plane defined by the fluid inside container C.

During the step of moving said optic deflector 31, control device 8 determines a reference point, from which the following measurement step can start. By determining said reference point, one can measure the cubature of said container C with a high resolution and with a reduced measurement uncertainty.

Preferably, the reference point is the point arranged at a minimum height from the bottom of container C. For the purpose of the present invention, the expression at a minimum height indicates the point in which protection structure 33, adapted to house and protect said deflector 31, lies on the bottom of the container along axis k, starting from opening C0, through which apparatus 2 is inserted. In order to determine the point arranged at the minimum height, the apparatus comprises a sensor 85, for example a torque sensor, which is applied to the rotation shaft of the motor comprised in the actuating device. When a predetermined maximum torque of the above-mentioned motor is reached, which occurs when protection structure 33 is on the bottom of container C, sensor 85 sends a signal control device 8, which disables the motor. After the motor has been disabled, control device 8, by means of the different devices connected thereto, determines said reference point, to which all the following data refer.

Preferably, in combination with said torque sensor 85 or as an alternative thereto, there is a shutter, which is normally open, which is fixed to second end 4b of shaft 4 by means of elastic elements, and is adapted to obstruct the exit of ray R from said optic deflector 31, when said shutter is pushed against the bottom of container C. When the shutter is pushed on the bottom, the force applied overcomes the elastic resistance and causes the shutter to interpose in the path of ray R. When said shutter interposes, the measurement performed by laser measurement device 3 has a value that is substantially equal to the length of shaft 4. When control device 8 receives a signal from said measurement device 3, distance d' calculated is substantially equal to zero. When distance d' is equal to zero, control device 8 disables the motor. Also in this case, after the motor has been disabled, control device 8 determines said reference point, to which all the following data refer.

The measuring step is performed in a continuous manner in time, preferably by starting from said minimum height from the bottom and by moving towards opening C0 up to a predetermined height h.

Height h is predetermined, for example, as a function of the manufacturing standards of container C and it preferably corresponds to the recommended maximum level of fluid that can be contained in container C.

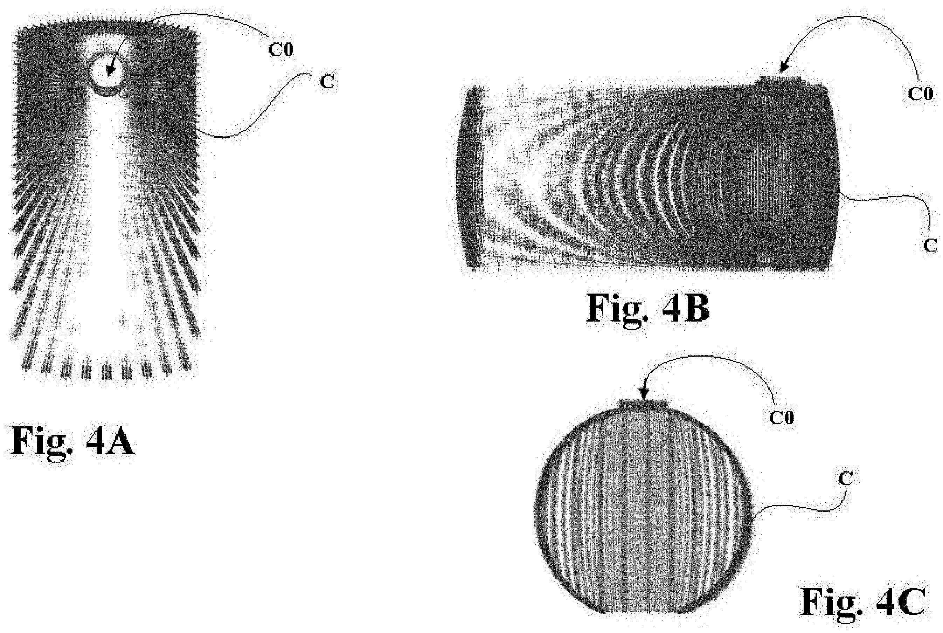

As mentioned above, for each measurement angle "α", electronic control device 8 stores in memory unit 82 angular position α, position h' along axis k, and distance d' of the walls from deflector 31, until predetermined height h is reached, where the measurement is ended. Starting from this data, one can determine the volume of said container and, by means of a displaying programme, one can obtain a three-dimensional representation of container C, as shown in figures 4A-4C.

Said method determines the rotation speed of deflector 31 and, as a consequence, the speed with which it is moved along axis k; furthermore, one can also determine the actual scanning time. By using a laser measurement device 3 and control device 8, one can significantly reduce the time needed to perform the measurement of the cubature with the classic methods based on filling the container with water.

Control device 8 can be connected to an electronic interface 84, which allows the operator to enter some data that are useful to perform the measurement. For example, by means of said interface 84, the operator can enter height h, along which the measurement has to be performed, or set the measurement speed.

To briefly sum up the measurement method, when the apparatus is correctly positioned, control device 8 enables actuating device 5, which starts moving said shaft 4, so that deflector 31 reaches the minimum height from the bottom of container C. After said reference point has been determined, measurement device 3 is enabled and the first datum on the size of container C is acquired; subsequently, said deflector is caused to move, namely to rotate and to be lifted along said axis k, thus acquiring the above-mentioned data (a, h', d') at regular pitches, both angular and along axis k. Said data are acquired in a continuous manner in time, until such height h is reached, where the measurement is interrupted.

The resolution and/or the uncertainty of the measurement can be increased or decreased as a function of the movement speed of deflector 31 and of angular pitch α.

Preferably, the rotation speed is comprised between the range 1 revolution per minute and 1 revolution per second, while angular pitch α is comprised in the range between 0.5° and 10°. The speed with which the movement along said axis k takes place can have a ratio ranging from 1:1 to 1:10 with respect to the rotation speed.

The apparatus 2 according to the present invention allows the measurement of the capacity of a container C for explosive or inflammable substances, thanks to the fact that no electrical/electronic device has to be inserted inside container ○ tank C and all the materials making up apparatus 2 and, in particular, the parts introduced into the container comply with the safety law provisions currently in force. For example, one can perform the measurement of tanks containing fluids of the inflammable type, which is not possible with the apparatuses of the prior art.

Furthermore, said apparatus allows the measurement of the capacity of a container C holding explosive vapors, without the need to degas container C itself, as provided for by law when using the apparatuses of the prior art.

**NUMERICAL REFERENCES**

| | |
|---|---|
| Apparatus | 2 |
| Casing | 20 |
| Guide | 22 |
| Laser measurement device | 3 |
| Optic deflector | 31 |
| Protection structure | 33 |
| Bearing shaft | 4 |
| First end | 4a |
| Second end | 4b |
| Through hole | 41 |
| Flange | 42 |
| Actuating device | 5 |
| Mechanism | 51 |
| Electronic control device | 8 |
| Encoder | 81 |
| Memory unit | 82 |
| Interface | 84 |
| Sensors | 85 |
| Articulated arm | 9 |
| End | 9a |
| Hinge | 91 |
| Container | C |
| Opening | C0 |
| Distance | d' |
| Height | h |
| Height | h' |
| Angle | α |
| Longitudinal axis | k |
| Laser ray | R |
| Vehicle | V |

## Claims

1. Apparatus (2) for measuring the capacity of a container (C) for explosive and/or inflammable substances;
said apparatus comprising:
• a laser measurement device (3), for generating a ray (R) for the measurement of a distance;
• at least one bearing shaft (4) which extends along a longitudinal axis (k), to be inserted, at least partially, into the container (C);
• a guide (22) arranged along a direction that is parallel to longitudinal axis (k) of shaft (4);
• an optic deflector (31), for deflecting said ray (R) in a desired direction;
• at least one electronic control device (8), for calculating the position of the optic deflector (31) and to process the data obtained from said laser measurement device (3);
• an actuating device (5), for moving:
- said laser measurement device (3);
- said actuating device (5) itself;
- said at least one bearing shaft (4);
- at least one electronic control device (8); of the apparatus (2), in order to perform the measurement of the capacity of said container (C),
said actuating device (5) comprising:
- at least one electric motor,
- at least one mechanism;
the apparatus being_**characterized in that**:
• said laser measurement device (3) is arranged outside the container (C) so that all the electronic apparatus, including said electronic control device (8), said guide (22) and the electronic part of the actuating device (5) are arranged outside of the container (C), and
• the optic deflector (31) is fixed to said bearing shaft (4).
• said at least one motor and said at least one mechanism, of the actuating device (5), are able to:
- cause said optic deflector (31) to rotate around the longitudinal axis (k), rotating said shaft (4), and
- to move the deflector (31) itself along a direction that is parallel to the longitudinal axis (k) of the shaft (4), moving said laser measurement device (3), said bearing shaft (4), said electronic control device (8) and actuating device (5) itself, comprised in said apparatus, along said guide (22).

2. Apparatus according to claim 1, wherein said bearing shaft (4) comprises a through hole (41), for the passage of the ray (R) from said laser measurement device (3) to said optic deflector (31) and vice versa.

3. Apparatus according to claim 1, wherein said optic deflector (31) is moved in a continuous manner in time.

4. Apparatus according to claim 1, wherein said laser measurement device (3) is arranged close to a first end (4a) of said bearing shaft (4) and said optic deflector (31) is fixed to the second end (4b) of said bearing shaft (4) .

5. Apparatus according to claim 4, wherein said shaft (4) is threaded with a predetermined pitch.

6. Method for measuring the capacity of a container (C) by means of the apparatus (2) according to claim 1 comprising the following steps:
• inserting the bearing shaft (4) into the container (C) ;
• placing the apparatus (2) in a vertical position;
• moving said optic deflector (31) so as to place it in a reference point at a known height from the bottom;
• starting the measurement procedure;
• rotating said deflector (31) around the longitudinal axis (k) of the shaft (4) and performing the measurement at predetermined angles (α);
**characterized in that** it comprises a step of
• moving the optic deflector (31) along said axis (k), this step being performed simultaneously with the step of rotating the deflector (31) itself.

7. Method according to claim 6, wherein the step of rotating said deflector and the step of moving said deflector are performed in a continuous manner in time.

8. Method according to claim 6, wherein the measurement is ended when it is reached a given height (h) from the previously determined reference point.

9. Vehicle comprising at least one articulated arm (9), **characterized in that** it comprises an apparatus (2) according to claim 1, which is connected to said arm (9).

10. Vehicle according to claim 9, wherein said apparatus (2) implements the method for measuring the capacity of a container (C) according to claim 7.

## Patentansprüche

1. Vorrichtung (2) zur Messung der Kapazität eines Behälters (C) für explosive und/oder entzündliche Stoffe;
wobei die Vorrichtung aufweist:
• ein Lasermessgerät (3) zur Erzeugung eines Strahls (R) für die Messung einer Entfernung;
• mindestens eine Lagerwelle (4), die sich entlang einer Längsachse (k) erstreckt, um zumindest teilweise in den Behälter (C) eingeführt zu werden;
• eine Führung (22), die entlang einer Richtung angeordnet ist, die parallel zur Längsachse (k) der Welle (4) ist;
• einen optischen Deflektor (31) zum Ablenken des Strahls (R) in eine gewünschte Richtung;
• mindestens eine elektronische Steuervorrichtung (8) zur Berechnung der Position des optischen Deflektors (31) und um die von dem Lasermessgerät (3) erhaltenen Daten zu verarbeiten;
• eine Betätigungsvorrichtung (5) zum Bewegen:
- des Lasermessgeräts (3);
- der Betätigungsvorrichtung (5) selbst;
- der mindestens einen Lagerwelle (4);
- mindestens einer elektronischen Steuervorrichtung (8); der Vorrichtung (2), um die Messung der Kapazität des Behälters (C) durchzuführen,
wobei die Betätigungsvorrichtung (5) aufweist:
- mindestens einen Elektromotor,
- mindestens einen Mechanismus;
wobei die Vorrichtung **dadurch gekennzeichnet ist, dass**:
• das Lasermessgerät (3) außerhalb des Behälters (C) angeordnet ist, so dass die gesamte elektronische Vorrichtung, einschließlich der elektronischen Steuervorrichtung (8), der Führung (22) und des elektronischen Teils der Betätigungsvorrichtung (5) außerhalb des Behälters (C) angeordnet sind, und
• der optische Deflektor (31) an der Lagerwelle (4) befestigt ist,
• der mindestens eine Motor und der mindestens eine Mechanismus der Betätigungsvorrichtung (5) in der Lage sind:
- den optischen Deflektor (31) um die Längsachse (k) drehen zu lassen, wobei die Welle (4) gedreht wird, und
- den Deflektor (31) selbst entlang einer Richtung zu bewegen, die parallel zur Längsachse (k) der Welle (4) ist, wobei das Lasermessgerät (3), die Lagerwelle (4), die elektronische Steuervorrichtung (8) und die Betätigungsvorrichtung (5) selbst, die in der Vorrichtung enthalten sind, entlang der Führung (22) bewegt werden.

2. Vorrichtung nach Anspruch 1, wobei die Lagerwelle (4) ein Durchgangsloch (41) für den Durchgang des Strahls (R) von dem Lasermessgerät (3) zum optischen Deflektor (31) und umgekehrt aufweist.

3. Vorrichtung nach Anspruch 1, wobei der optische Deflektor (31) zeitlich kontinuierlich bewegt wird.

4. Vorrichtung nach Anspruch 1, wobei das Lasermessgerät (3) nahe einem ersten Ende (4a) der Lagerwelle (4) angeordnet ist und der optische Deflektor (31) am zweiten Ende (4b) der Lagerwelle (4) befestigt ist.

5. Vorrichtung nach Anspruch 4, wobei die Welle (4) ein Gewinde mit einer vorgegebenen Steigung aufweist.

6. Verfahren zur Messung der Kapazität eines Behälters (C) mittels der Vorrichtung (2) nach Anspruch 1, aufweisend die folgenden Schritte:
• Einführen der Lagerwelle (4) in den Behälter (C);
• Aufstellen der Vorrichtung (2) in einer vertikalen Position;
• Bewegen des optischen Deflektors (31), um ihn an einem Referenzpunkt in bekannter Höhe vom Boden zu platzieren;
• Starten des Messvorgangs;
• Drehen des Deflektors (31) um die Längsachse (k) der Welle (4) und Durchführen der Messung in vorbestimmten Winkeln (d);
**dadurch gekennzeichnet, dass** es einen Schritt
• Verschieben des optischen Deflektors (31) entlang der Achse (k) aufweist, wobei dieser Schritt gleichzeitig mit dem Schritt des Drehens des Deflektors (31) selbst durchgeführt wird,

7. Verfahren nach Anspruch 6, wobei der Schritt des Drehens des Deflektors und der Schritt des Bewegens des Deflektors zeitlich kontinuierlich durchgeführt werden.

8. Verfahren nach Anspruch 6, wobei die Messung beendet wird, wenn eine bestimmte Höhe (h) vom zuvor bestimmten Referenzpunkt erreicht ist.

9. Fahrzeug mit mindestens einem gelenkigen Arm (9),
**dadurch gekennzeichnet, dass** es eine Vorrichtung (2) nach Anspruch 1 aufweist, die mit dem Arm (9) verbunden ist.

10. Fahrzeug nach Anspruch 9, wobei die Vorrichtung (2) das Verfahren zur Messung der Kapazität eines Behälters (C) nach Anspruch 7 ausführt.

## Revendications

1. Appareil (2) pour la mesure de la capacité d'un conteneur (C) pour des substances explosives et/ou inflammables ; ledit appareil comprenant:
- un dispositif laser de mesure (3), pour générer un rayon (R) pour la mesure d'une distance;
- au moins un arbre porteur (4) qui s'étend suivant un axe longitudinal (k), pour être inséré, au moins partiellement, dans le conteneur (C) ;
- un guide (22) agencé suivant une direction qui est parallèle à un axe longitudinal (k) de l'arbre (4) ;
- un déflecteur optique (31) pour dévier ledit rayon (R) dans une direction désirée ;
- au moins un dispositif de commande électronique (8) pour calculer la position du déflecteur optique (31) et pour traiter les données obtenues à partir dudit dispositif laser de mesure (3) ;
- un dispositif d'actionnement (5) pour déplacer :
--ledit dispositif laser de mesure (3) ;
--ledit dispositif d'actionnement (5) lui-même ;
--ledit au moins un arbre porteur (4) ;
--au moins un dispositif de commande électronique (8) de l'appareil (2), de manière à effectuer la mesure de la capacité dudit conteneur (C),
Ledit dispositif d'actionnement (5) comprenant :
- au moins un moteur électrique,
- au moins un mécanisme ;
l'appareil étant **caractérisé en ce que** :
- ledit dispositif laser de mesure (3) est disposé à l'extérieur du conteneur (C) de sorte que tout l'appareil électronique, comprenant ledit dispositif de commande électronique (8), ledit guide (22) et la partie électronique du dispositif d'actionnement (5) sont agencés à l'extérieur du conteneur (C) et
- le déflecteur optique (31) est fixé audit arbre porteur (4),
- ledit au moins un moteur et ledit au moins un mécanisme, du dispositif d'actionnement (5), sont aptes à :
- forcer ledit déflecteur optique (31) à tourner autour de l'axe longitudinal (k), en faisant tourner ledit arbre (4), et
- à déplacer le déflecteur (31) lui-même suivant une direction qui est parallèle à l'axe longitudinal (k) de l'arbre (4), en déplaçant ledit dispositif laser de mesure (3), ledit arbre porteur (4), ledit dispositif de commande électronique (8) et le dispositif d'actionnement (5) lui-même, compris dans ledit appareil, le long dudit guide (22).

2. Appareil selon la revendication 1, dans lequel ledit arbre porteur (4) comprend un trou passant (41), pour le passage du rayon (R) dudit dispositif laser de mesure (3) audit déflecteur optique (31) et inversement.

3. Appareil selon la revendication 1, dans lequel ledit déflecteur optique (31) est déplacé d'une manière continue dans le temps.

4. Appareil selon la revendication 1, dans lequel ledit dispositif laser de mesure (3) est disposé près d'une première extrémité (4a) dudit arbre porteur (4) et ledit déflecteur optique (31) est fixé à la deuxième extrémité (4b) dudit arbre porteur (4).

5. Appareil selon la revendication 4, dans lequel ledit arbre (4) est fileté avec un pas prédéterminé.

6. Procédé pour la mesure de la capacité d'un conteneur (C) au moyen de l'appareil (2) selon la revendication 1, comprenant les étapes suivantes :
- l'insertion de l'arbre porteur (4) dans le conteneur (C) ;
- le positionnement de l'appareil (2) dans une position verticale ;
- le déplacement dudit déflecteur optique (31) de manière à le placer dans un point de référence à une hauteur connue par rapport au fond ;
- le démarrage de la procédure de mesure ;
- la rotation dudit déflecteur (31) autour de l'axe longitudinal (k) de l'arbre (4) et l'exécution de la mesure à des angles prédéterminés (α) ;
**caractérisé en ce qu'**il comprend une étape de
- déplacement du déflecteur optique (31) le long dudit axe (k), cette étape étant effectuée simultanément avec l'étape de rotation du déflecteur (31) lui-même.

7. Procédé selon la revendication 6, dans lequel l'étape de rotation dudit déflecteur et l'étape de déplacement dudit déflecteur sont effectuées d'une manière continue dans le temps.

8. Procédé selon la revendication 6, dans lequel la mesure est terminée quand une hauteur donnée (h) par rapport au point de référence précédemment déterminé est atteinte.

9. Véhicule comprenant au moins un bras articulé (9), **caractérisé en ce qu'**il comprend un appareil (2) selon la revendication 1, qui est connecté audit bras (9).

10. Véhicule selon la revendication 9, dans lequel ledit appareil (2) met en œuvre le procédé pour la mesure de la capacité d'un conteneur (C) selon la revendication 7.
